# EUROPÄISCHE PATENTSCHRIFT

(11) **EP 2 509 916 B1**
(45) Veröffentlichungstag und Bekanntmachung des Hinweises auf die Patenterteilung: **15.01.2014**
(21) Anmeldenummer: 09795696.5
(22) Anmeldetag: 09.12.2009
(51) Int. Cl.: C01B 25/222, C01B 25/26, C01B 25/32, C01B 25/45

(54) **VERFAHREN ZUR HERSTELLUNG VON PHOSPHATEN UND PHOSPHATHALTIGEN VERBINDUNGEN, INSBESONDERE ERDALKALIPHOSPHATEN, ERDALKALISILICOPHOSPHATEN BZW. ERDALKALIOXIDEN**
METHOD FOR PRODUCING PHOSPHATES AND COMPOUNDS CONTAINING PHOSPHATES, IN PARTICULAR ALKALINE-EARTH PHOSPHATES, ALKALINE-EARTH SILICOPHOSPHATES OR ALKALINE-EARTH OXIDES
PROCÉDÉ DE PRODUCTION DE PHOSPHATES ET DE COMPOSÉS CONTENANT DU PHOSPHATE, NOTAMMENT DES PHOSPHATES ALCALINO-TERREUX, DES SILICOPHOSPHATES ALCALINO-TERREUX OU ENCORE DES OXYDES ALCALINO-TERREUX

(43) Veröffentlichungstag der Anmeldung: 17.10.2012
(73) Patentinhaber: Klose, Ingeborg, 56626 Andernach (DE); Zepke, Frank, 48351 Everswinkel (DE)
(72) Erfinder: KLOSE, Siegfried, 56626 Andernach (DE)
(74) Vertreter: Patentanwälte Dr. Keller, Schwertfeger
(86) Internationale Anmeldenummer: PCT/EP2009/008790
(87) Internationale Veröffentlichungsnummer: WO 2011/069524

(56) Entgegenhaltungen:
- WO-A1-2009/039864

## Beschreibung

### Technisches Gebiet:

Die vorliegende Erfindung betrifft ein Verfahren zur Herstellung von Phosphaten und phosphathaltigen Verbindungen, insbesondere Erdalkaliphosphaten, Erdalkalisilicoposphaten und -oxiden gemäß dem Oberbegriff des Patentanspruchs 1.

### Stand der Technik:

Phosphate spielen eine wichtige Rolle bei der Herstellung von verschieden chemischen Produkten, wie zum Beispiel Dünger, Waschmittelzusätzen, Lebensmittelzusatzstoffen, Futtermittel, Korrosionsschutzmittel. Chemisch gesehen sind Phosphate Salze und Ester der Ortho-Phosphorsäure. Phosphate werden aus vulkanischen oder sedimentären Lagerstätten gewonnen. Solche Vorkommen sind jedoch in absehbarer Zeit erschöpft, so dass mit einem Mangel an Phosphat und steigenden Preisen zu rechnen ist. Es wird daher verstärkt versucht, Phosphat aus Klärschlamm zu isolieren, um die Bereitstellung von Phosphat zu sichern.

Die Hauptvorkommen von Phosphaten natürlichen Ursprungs liegen im nördlichen Afrika, Marokko, Westsahara, auf der Kola-Halbinsel, in Russland, Florida, Südafrika und China. Weitere Vorkommen sind auch in Saudi-Arabien vorhanden, einige andere Abbauorte sind bereits erschöpft.

Die oben genannten Ressourcen von Phosphaten werden, wie anfangs erwähnt, in absehbarer Zeit erschöpft sein. Auch besteht ein großes Problem darin, dass die meisten dieser mineralischen Quellen mit Cadmium und anderen Schwermetallen belastet sind. Viele Industrieländer haben bereits einen Grenzwert für die Cadmiumkonzentration in Düngemitteln eingeführt. Lediglich ein Abbaugebiet, Kola, ist bekannt, bei dem der Apatit die zulässigen Grenzwerte an Cadmium und Schwermetallen innerhalb der europäischen Gemeinschaft unterschreitet. Als Folge steigen die Preise für Phosphate und den daraus hergestellten Produkten, insbesondere Düngemitteln, sehr stark an. Zunehmend muss man daher dazu übergehen, Phosphate aus nicht belasteten Quellen heranzuziehen.

Die Gewinnung von Phosphaten aus Klärschlamm führt leider zu nicht zufrieden stellenden Quantitäten und Qualitäten. Ferner ist der Aufwand zur Herstellung der aus dem Klärschlamm gefällten und physikalischlbiologisch angereicherten und von (Schwer-)Metallen befreiten Phosphate sehr groß und benötigt viel Energie.

Es ist bekannt, dass Knochen und Gräten einen hohen Mineralgehalt aufweisen und überwiegend aus Calcium und Phosphat bestehen. Beim Verbrennen von Knochen oder Gräten erhält man eine grau-weiße, porige Knochenasche, welche zu etwa 80 % aus Calciumphosphat, zu 6,6 % aus Calciumkarbonat und zu etwa 1,4 % aus Magnesiumphosphat besteht. Bislang ist man auf diese natürlichen Phosphatquellen zur gezielten Herstellung von Phosphat nicht aufmerksam geworden.

Die Herstellung von Phosphaten aus organischem Material ist bekannt. Man vergleiche beispielsweise die D1 (WO 2009/039864 A1), DE 103 12 603 B4, DE 102 23 657 B4, DE 101 24 073 B4, DE 101 40 312 A1, DE 100 30 550 A1 oder die JP 2003-176189. Diese Druckschriften beschäftigen sich jedoch entweder nicht mit der Herstellung von Phosphaten oder beschreiben einstufige Verfahren, die nicht mit dem zweistufigen erfindungsgemäßen Verfahren gemäß der vorliegenden Erfindung vergleichbar sind.

### Darstellung der Erfindung:

Der vorliegenden Erfindung liegt die Aufgabe zugrunde, ein Verfahren zur Herstellung von Phosphaten und/oder phosphathaltigen Verbindungen bereit zu stellen, mit dem die somit hergestellten Phosphate und/oder phosphathaltigen Verbindung in hoher Ausbeute und Reinheit schnell, kostengünstig und effizient hergestellt werden können.

Diese Aufgabe wird gelöst durch ein Verfahren mit den Merkmalen des Anspruchs 1.

Mit dem erfindungsgemäßen zweistufigen Verfahren ist es möglich, die bislang bestehenden Nachteile der Herstellung von Phosphaten aus natürlichen Lagerstätten und sonstigen Quellen zu vermeiden. Insbesondere werden Phosphate in hoher Ausbeute und in nahezu chemisch reiner Form erhalten. Die mit dem erfindungsgemäßen Verfahren hergestellten Phosphate sind nahezu frei von Cadmium und Schwermetallen und kommen lediglich in unbedenklichen Anteilen weit unterhalb jeglicher Grenzwerte im Endprodukt vor. Cadmiumverunreinigungen und Schwermetallbelastungen, wie sie bei den natürlich vorkommenden Phosphatressourcen enthalten sind, werden durch das erfindungsgemäße Verfahren vermieden. Durch die Erfindung wird ein kosteneffizientes und schnelles Verfahren zur Herstellung von Phosphat bzw. phosphathaltigen Verbindungen bereit gestellt.

Mit dem beschriebenen Verfahren kann ferner chemisch reine Phosphorsäure hergestellt werden.

Das erfindungsgemäße Verfahren zur Herstellung von Phosphaten und/oder phosphathaltigen Verbindung, insbesondere Erdalkaliphosphaten und Erdalkalisilicophosphaten und -oxiden umfasst die Schritte:
(a) Erhitzen von Knochen und/oder Gräten oder einer Zusammensetzung dieser Bestandteile in einer Pyrolyse unter Sauerstoffabschluss und unter reduzierenden Bedingungen bei Temperaturen zwischen 500 bis 1100 °C, wobei unter anderem energiereiche Gase, Dämpfe und Kohlenstoff entstehen,
(b) Nachverbrennung des in Schritt (a) entstandenen Kohlenstoffs unter oxidierenden Bedingungen in einer Oxidationsstufe, wobei ein anorganischer Rest aus Erdalkali-Karbonaten und Erdalkali-Oxiden sowie ErdalkaliPhosphaten entsteht.

Die gewonnen hochreinen Erdalkali-Phosphate eignen sich als Düngemittel oder zur Weiterverarbeitung zur Phosphorsäure.

In dem ersten Schritt (a) werden die Knochen und Gräten unter reduzierenden Bedingungen bei Temperaturen von etwa 500 bis etwa 1100 °C in ihre organischen und anorganischen Bestandteile zerlegt. Die Knochen oder Gräten werden vorzugsweise bis vorher grob zermahlen. Dabei werden die organischen Molekülketten aufgebrochen und es entstehen im wesentlichen energiereiche Gase wie Wasserstoff, Kohlenmonoxid und Methan. Die in diesen Gasen gebundene Energie kann beispielsweise zur Herstellung von elektrischem Strom genutzt werden.

Die Erfinder haben festgestellt, dass der anorganische Rest aus Schritt (a) überwiegend aus Calcium- und Magnesiumkarbonat und/oder Calcium- und Magnesiumoxid sowie verschiedenen Calciumphosphaten neben einem beträchtlichen Überhang zwischen 5 bis 20 % reinem Kohlenstoff besteht. Dieser Kohlenstoff wird in einem zweiten Schritt (b) oxidativ nachverbrannt, wobei wiederum beträchtliche Energiemengen freigesetzt werden. Letztendlich bleibt ein anorganischer Rest aus Erdalkalikarbonaten und -oxiden sowie Erdalkaliphosphaten zurück, welcher nahezu vollständig frei von organischen Stoffen und insbesondere frei von schädlichen Keimen, wie zum Beispiel Prionen ist.

Der erste Schritt (a) wird vorzugsweise bei einer Temperatur von 700 bis 900 °C durchgeführt. Bei diesen Temperaturen ist die Ausbeute an Phosphat bzw. phosphathaltigen Verbindungen am größten.

Es hat sich ferner als vorteilhaft herausgestellt, wenn die Reaktionsgemische vor der Umsetzung mit geeigneten technischen Maßnahmen (z. B. Rührwerke, Umwälzvorrichtung) vor Abschluss von Schritt (a) und/oder zu Beginn von Schritt (b) umgewälzt werden. Dadurch können höhere Energien und Phosphatausbeuten erzielt werden. Das Verfahren wird effizienter.

Dem Verfahren können ferner Magnesiumverbindungen oder Kaliumverbindungen zugegeben werden. Die gezielte Zugabe von Rohmagnesit (MgCO₃) führt zur kontrollierten Anreicherung des mineralischen Feststoffes Mg bzw. MgO. Vorzugsweise wird eine Menge von 10 bis 40 %, vorzugsweise 25 % MgCO₃ zugegeben, was zu einem MgO-Gehatt von etwa 10 % MgO führt. Dies ist für die landwirtschaftliche Nutzung im Sinne der Pflanzen- und Tierernährung von zunehmender Bedeutung. In einer weiteren Ausführungsform können den Knochen und/oder Gräten bzw. Zusammensetzungen davon organisch mineralische Kaliumverbindungen zugeführt werden. Diese kommen beispielsweise aus der Veresterung oder Umesterung pflanzlicher oder tierischer Fette und Öle. Dabei entstehen als Nebenprodukt Kaliumverbindungen mit signifikanten Anteilen an unterschiedlichen Fettsäuren. Das letztere führt zu einer weiteren Verbesserung der Energiebilanz des erfindungsgemäßen Verfahrens. Kalium liegt am Ende des Prozesses in Form von anorganischen Kaliumverbindungen vor, wie zum Beispiel gebunden in Karbonaten und/oder Sulfaten und/oder Phosphaten. Dadurch kann beispielsweise ein für den Pflanzenbau geeigneter Phosphat-Kalium-Kalk-Magnesium-Dünger hergestellt werden. Vorzugsweise werden die organisch mineralischen Kaliumverbindungen vor der reduktiven Phase zugegeben.

In einer bevorzugten Ausführungsform wird den Knochen und/oder Gräten bzw. Zusammensetzungen davon Siliziumverbindungen zugegeben, beispielsweise in Form von Wasserglas, Kieselgur und/oder Perlite. Bei den Verfahrenstemperaturen kommt es zu einer Zerlegung dieser Siliziumverbindungen und schließlich zu einer Verbindung mit den Erdalkalimetallen und den Phosphaten zur Erdalkalisilico-Phosphaten. Diese Verbindungen sind zur Verwendung als Düngemittel für die Verbesserung von mineralstoffarmen Böden besonders geeignet.

Unter Zugabe von Siliziumverbindungen, wie sie zum Beispiel aus Kieselguren bekannt sind, findet während der oxidativen Nachverbrennung die Bildung sogenannter Erdalkalisiliziumphosphatkomplexen statt. Die dabei entstehenden Phosphatlöslichkeiten entsprechen in ihrer Zusammensetzung und der gesamten Verfügbarkeit den bekannten Glühphosphaten, wie zum Beispiel dem Rhenania-Phosphat. Die basisch wirksamen Calcium- und/oder Magnesiumverbindungen liegen je nach gewählter Temperatur als Karbonate (bei einer Temperatur kleiner < 900 °C) oder Oxide (bei einer Temperatur > 900 °C) vor.

Die in den Schritten (a) und/oder (b) gewonnene Energie kann dem Verfahren rückgeführt werden. Bevorzugt werden die durch Erhitzen der organischen Knochenbestandteile gebildeten Gase bzw. Dämpfe verbrannt. Die Gase und Dämpfe können zum Erhitzen der eingesetzten Knochen, Gräten und gegebenenfalls Zusatzstoffen verwendet werden.

Die durch das Verfahren hergestellten Phosphate bzw. phosphathaltigen Verbindungen sind hauptsächlich Di- und TriCalciumphosphate.

Die chemische Reinheit der aus Tierknochen und Gräten gewonnenen Phosphate- und Phosphatsilizium- sowie Magnesiumverbindungen ist hinsichtlich der Schwermetallanteile alle natürlich vorkommenden Phosphaten der anfangs erwähnten Lagerstätten deutlich überlegen. Dies betrifft insbesondere den Anteil des Elementes Cadmium im Vergleich zu den hohen und zum Teil über den Grenzwert liegenden Cadmiumkonzentrationen bei Sedimentphosphaten.

Das erfindungsgemäße Verfahren eignet sich auch zur Eliminierung von Schwermetallen. Schermetalle sind beispielsweise Blei, Cadmium, Chrom, Kupfer, Nickel, Zink und Quecksilber. Während der Pyrolyse des ersten Schrittes gehen unter reduzierenden Bedingungen und Sauerstoffausschluss bereits beträchtliche Menge der Schwermetalle in die Gasphase über und werden eliminiert. Eine weitere Reduktion der Schwermetalle findet in der sich anschließenden Oxidationsstufe statt. Das Ergebnis ist ein hochreines Produkt mit einem geringen Schwermetallanteil.

Das Verfahren kann durch die Rückführung der in den Schritten (a) und (b) gewonnenen Energie völlig autark betrieben werden. Lediglich während der Phase der Inbetriebnahme ist eine externe Energiezufuhr erforderlich. Auch können beide Verfahrensschritte (a) und (b) in den selben Reaktionsbehältern stattfinden oder nacheinander in verschiedenen Behältern (Batch-Verfahren).

Das erfindungsgemäße Verfahren zur Gewinnung von hochwertigen Phosphaten neben der Energieausbeutung aus tierischen Knochen und Gräten kann global zu einer Entspannung bei dem Wettlauf um Rohstoffreserven, insbesondere bei der Herstellung von Phosphaten, beitragen. Aus 1.000.000 t/a Knochen und Gräten, die aus Schlachtabfällen zur Verfügung gestellt werden können, können beispielsweise 150.000 t/a Phosphat (P₂O₅) gewonnen werden. Dadurch können viele der zukünftig entstehenden oder bereits vorhandenen Probleme hinsichtlich der Phosphatvorkommen gelöst werden. Die positive Energiebilanz des Verfahrens leistet zudem einen Beitrag zu einer ökonomisch und ökologischen Prozessgestaltung des erfindungsgemäßen Verfahrens.

Die Phosphatgewinnung aus Klärschlamm ist sehr teuer und aufwendig und bringt keine zufriedenstellende Lösung. Mit dem erfindungsgemäßen Verfahren ist es möglich, auf einfache und schnelle Weise für die Gewinnung von Phosphat bzw. phosphathaltigen Verbindungen zu sorgen. Die einzelnen aus dem Verfahren hervorgehenden Produkte können je nach Anwendungsbereich unterschiedlich weiterbehandelt werden. Beispielsweise führt eine Behandlung der gewonnenen Erdalkaliphosphaten mit Lebensmittel-Schwefelsäure zu nahezu chemisch reiner Phosphorsäure. Die mit dem erfindungsgemäßen Verfahren erzielten Ausbeuten und Reinheitsgrade lassen sich mit den weltweit vorkommenden Phosphatvorräten nicht erreichen.

Die Erfindung findet bei der Herstellung von Dünger, Kosmetikprodukten, Waschmittelprodukten, pharmazeutischen Produkten, Lebensmittelprodukten, Futtermittelprodukten und sonstigen phosphathaltigen chemischen Produkten Anwendung.

Eine mögliche Variante der Erfindung wird in der nachfolgenden Zeichnung näher erläutert.

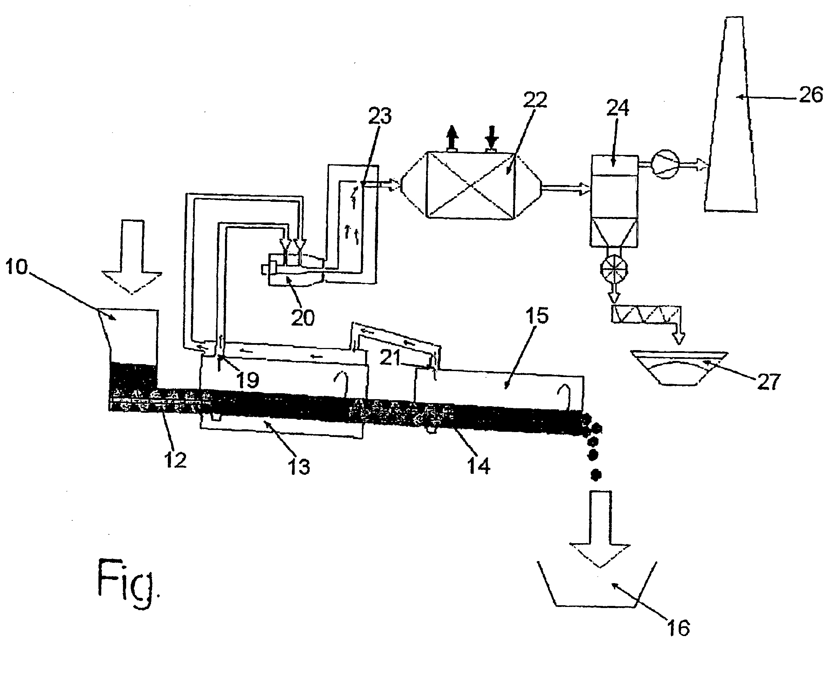

In der Figur sind die verschiedenen Anlagenteile zur Herstellung von Phosphat bzw. phosphathaltigen Verbindungen gezeigt.

Knochen und/oder Gräten werden zunächst in einen Kastenbeschicker 10 gegeben und mit einem Drehrohr 12 vor dem ersten Verfahrensschritt (a) umgewälzt. In einer Pyrolyseaparatur 13 findet unter reduktiven Bedingungen eine thermische Erhitzung der Knochen bzw. Gräten bei hohen Temperaturen (vorzugsweise zwischen 500 und 1100 °C) statt. Nach diesem ersten Verfahrensschritt wird die Reaktionsmasse mit einem zweiten Drehrohr 14 wiederum umgewälzt und in einer weiteren Apparatur zur oxidativen Nachverbrennung 15 geführt. Wie anfangs erwähnt, kann der zweite Verfahrensabschnitt (b) auch in dem selben Behälter durchgeführt werden.

Die oxidative Nachverbrennung findet bei Temperaturen zwischen 500 und 1200 °C statt. Die in dem ersten und zweiten Schritt entstehenden energiereichen Gase und Dämpfe werden über Auslässe 19, 21 aus den Apparaturen 13, 14 zur Energieaufbereitung abgefangen.

Die nach dem zweiten Verfahrensschritt hergestellten Phosphate bzw. phosphathaltigen Verbindungen (Erdalkaliphosphate) können über weitere Apparaturen 16 je nach Anwendungsbereich gesammelt oder weiterverarbeiten werden.

Zur Energiegewinnung ist eine Nachbrennkammer 20 vorgesehen, in der die Gase 23 schließlich einem Dampferzeuger 22 zugeführt werden. Weiter dargestellt sind bevorzugte Anbauteile, insbesondere ein Filter 24 und ein Kamin 26. Der bei der Filterung entstehende Staub kann in einem Staubbehälter 27 aufgefangen werden.

### Beispiel 1:

Knochen aus Schlachtabfällen wurden bei unterschiedlichen Temperaturen (Versuchsvarianten V1, V2, V3) unter reduktiven Bedingungen in einem ersten Schritt (a) behandelt. Proben der selben Versuchsvariante wurden anschließend in einem zweiten Schritt (b) oxidativ nachverbrannt (Versuchsvarianten V1.1, V2.2, V3.1). Für jede Versuchsvariante wurde die Phosphatlöslichkeit nach der reduktiven Behandlung und oxidativen Nachverbrennung bestimmt.

Dabei zeigt sich, dass durch die Nachschaltung des oxidativ Nachverbrennungsschrittes (Schritt (b)) die Menge an mineralsäurenlöslichen Phosphat gesteigert werden kann.

In der Tabelle 1 sind die Phosphatlöslichkeiten nach reduktiver Behandlung von Fleischknochen bei unterschiedlichen Temperaturen und oxidativen Nachverbrennungen gezeigt. Die Versuchsvarianten sind entsprechend der reduktiven und oxidativen Behandlungen dargestellt.

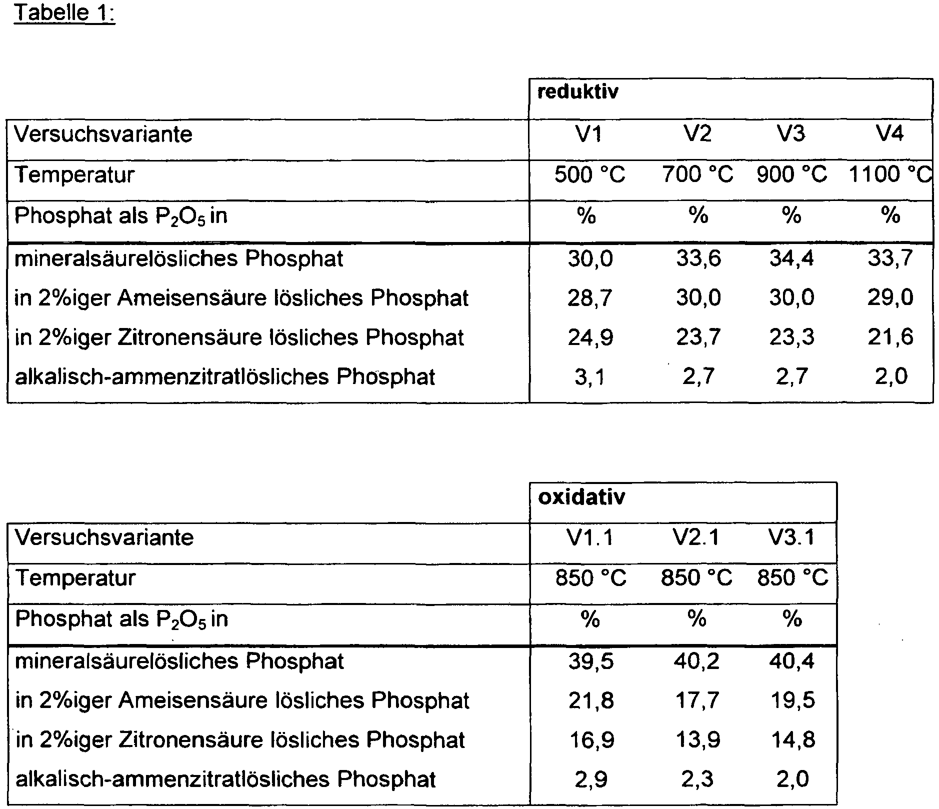

Die Phosphatgehalte der Rückstände liegen in der reduktiven Phase zwischen 31,0 (V1) und 34,4 % P₂O₅ (V3). Die optimale P₂O₅-Ausbeute liegt daher für Verfahrensschritt (a) bei Temperaturen zwischen 700 °C (V2) und 900 °C (V3). Höhere Temperaturen weisen keinen signifikanten P₂O₅-Zugewinn auf. Die für die Pflanzenernährung sowie weitergehende Aufschlüsse wertvollen DiCalciumphosphate (alkalisch-ammonzitratlösliches Phosphat) und Tricaliziumphosphate (2 %ige Ameisensäure/Zitronensäure lösliches Phosphat) sowie mineralsäurelösliche Phosphate sind in signifikanten Mengen vorhanden.

Ferner konnte nachgewiesen werden, dass in der oxidativen Phase der gesamte Rest-Kohlenstoff in thermische Energie umgesetzt wird. Die P₂O₅-Bindungsform erfahren unter oxidativen Bedingungen eine Verlagerung zu den TriCalciumphosphaten.

In der oxidativen Behandlungsphase des Schrittes (b) erhöht sich die gesamt P₂O₅-Konzentration um Werte zwischen 19,6 und 27,4 %. Die Versuchsvarianten V2.1 und V3.1 weisen zudem P₂O₅-Konzentrationen von mehr als 40 % auf. Diese hohen Werte liegen in der Natur allenfalls in den vulkanischen Apatiten (z. B. Kola-Apatit) vor.

### Beispiel 2:

In Anlehnung an die im Beispiel 1 beschriebene Verfahrensweise wurde der Gesamt-Kohlestoffgehalt (TC) nach reduktiver Behandlung von Fleischknochen bei unterschiedlicher Temperaturen oder oxidativen Nachverbrennungen sowie die Entwicklung der Gehalte anorganischer Substanzen ermittelt. Die einzelnen Versuchsvarianten sind in der Tabelle 2 entsprechend der reduktiven und oxidativen Behandlung aufgeführt.

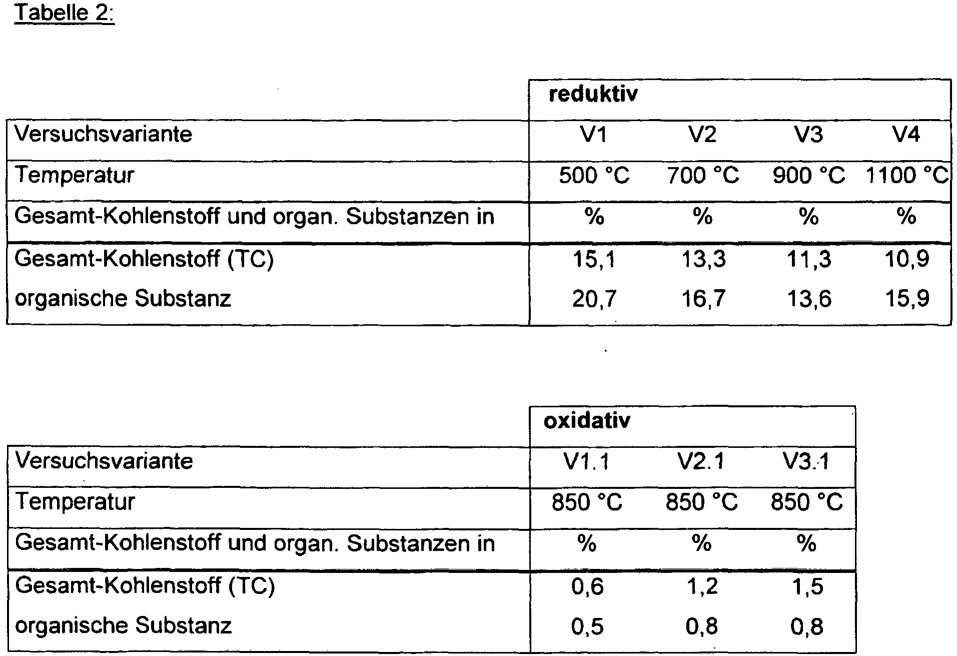

Deutlich erkennbar ist, dass nach der oxidativen Nachverbrennung der Gesamt-Kohlenstoff (TC) und die organische Substanz nahe zu vollständig in thermische Energie umgewandelt wurde. Nach dem ersten Verfahrensschritt (a) schwanken die Restkohlenstoffgehalte in der ersten Phase zwischen 10,9 % bei einer Temperatur von 1100 °C, um 15,1 % bei einer Temperatur von 500 °C. Der gleiche Trend ist auch bei dem Gehalt an organischen Substanzen erkennbar.

### Beispiel 3:

Ein Vorteil des erfindungsgemäß hergestellten Phosphat bzw. der phosphatenthaltenen Verbindung liegt darin, dass die so gewonnenen Phosphatverbindungen nur sehr geringen Mengen an Schwermetallen aufweisen. Natürlich vorkommende Phosphatquellen sind deutlich mit Schwermetallen, insbesondere mit Cadmium, belastet.

In der Tabelle 3 sind die Schwermetallgehalte in Feststoff nach reduktiver Behandlung von Fleischknochen mit unterschiedlichen Temperaturen und oxidativen Nachverbrennungen im Vergleich zu Rohphosphaten, wie sie bei den bislang erhältlichen Ressourcen verfügbar sind, gegenübergestellt. Ferner sind die zulässigen Grenzwerte nach der deutschen Düngemittelverordnung (DünVO/03) dargestellt.

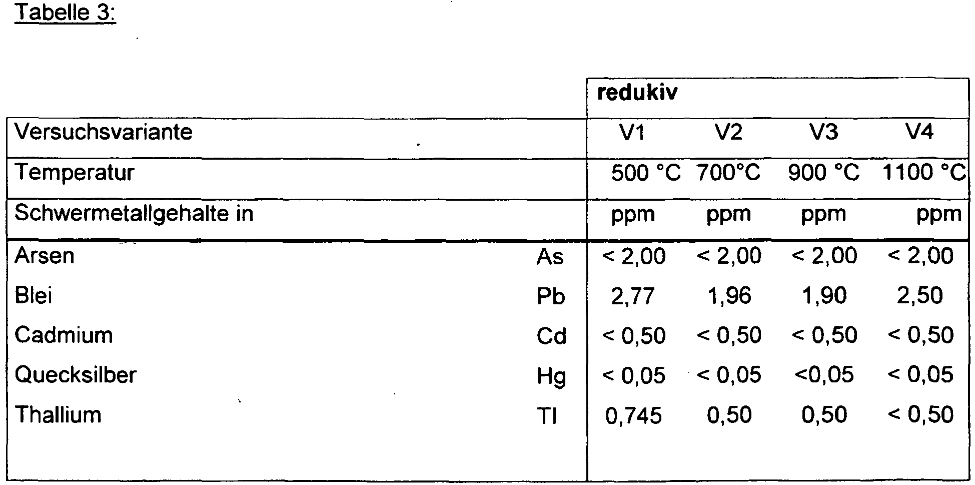

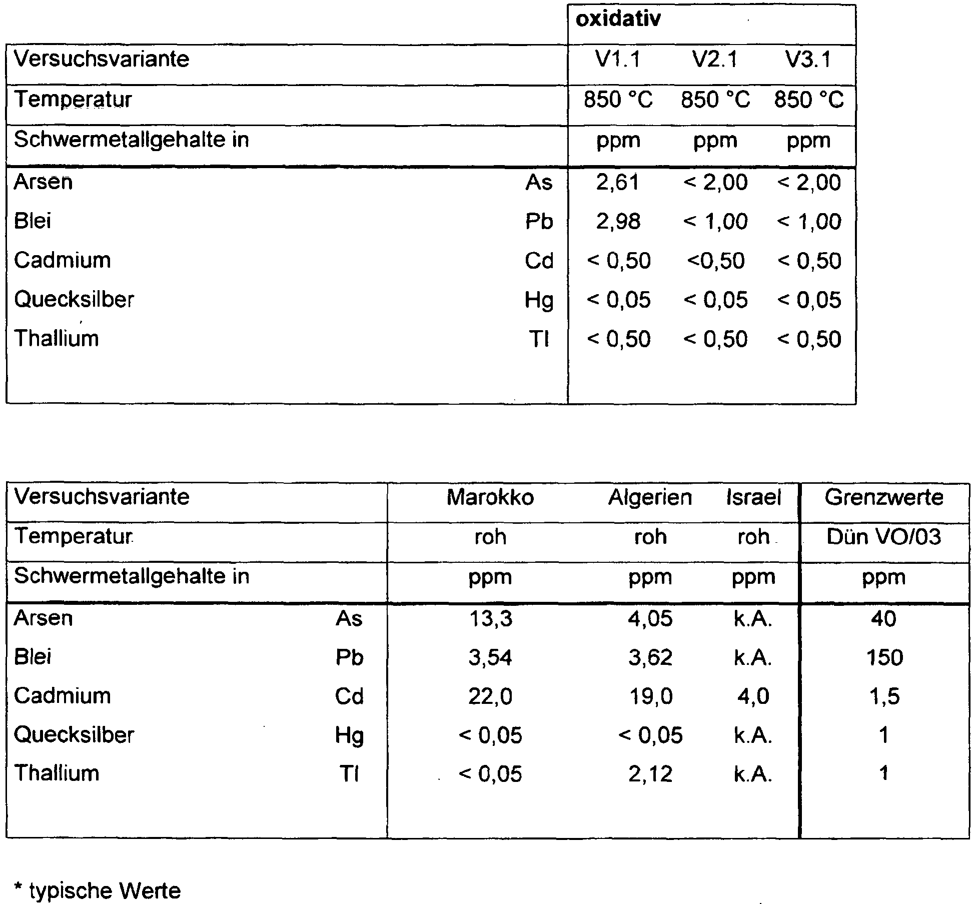

Deutlich erkennbar ist, dass bereits schon nach dem ersten Verfahrensschritt des erfindungsgemäßen Verfahren nahezu kein Cadmium bei den einzelnen Versuchsvarianten nachweisbar ist. Die Schwermetallgehalte von Phosphaten aus Marokko, Algerien, Israel liegen deutlich über den Werten der erfindungsgemäß hergestellten Produkten. Zum Teil liegen sie auch deutlich über den zulässigen Grenzwerten, so dass Phosphate aus diesen Regionen nicht ohne Nachbehandlung beispielsweise für den Einsatz als Düngemittel, verwendet werden können. Das erfindungsgemäß hergestellte Phosphat ist hochgradig chemisch rein.

### Beispiel 4:

Die folgende Tabelle 4 veranschaulicht die Dringlichkeit eines Alternativverfahrens gemäß der Erfindung. Viele der Vorräte der Phosphat-Ressourcen werden kurz-/ mittelfristig nicht mehr zur Verfügung stehen.

**Tabelle 4:**

| | | Marokko | Tunesien | Jordanien | Israel | Südafrika | Russland | USA | China |
|---|---|---|---|---|---|---|---|---|---|
| Vorräte | % | 34 | k.A. | 5 | k.A. | 9 | k.A. | 6 | 39 |
| Produktion | % | 17 | 5 | k.A. | k.A. | k.A. | 7 | 26 | 21 |

Viele der Phosphatvorräte sind bereits aufgebraucht oder werden in den nächsten Jahren bzw. Jahrzehnten aufgebraucht werden. Es ist zu erwarten, dass die Preise ohne die Bereitstellung eines Alternativerfahrens drastisch steigern werden.

## Patentansprüche

1. Verfahren zur Herstellung von Phosphaten und/oder phosphathaltigen Verbindungen bestehend aus den Schritten:
(a) Erhitzen von Knochen und/oder Gräten oder einer Zusammensetzung dieser Bestandteile unter Sauerstoffausschluss bei Temperaturen zwischen 500° bis 1100°C,
(b) Nachverbrennung des in Schritt (a) entstandenen Kohlenstoffs unter oxidierenden Bedingungen bei Temperaturen zwischen 500° bis 1200 °C.

2. Verfahren nach Anspruch 1, **dadurch gekennzeichnet, dass** der Schritt (a) bei einer Temperatur zwischen 700° bis 900°C durchgeführt wird.

3. Verfahren nach einem der Ansprüche 1 oder 2, **dadurch gekennzeichnet, dass** die Knochen und/oder Gräten bzw die Zusammensetzung vor dem Schritt (a) und/oder dem Schritt (b) umgewälzt werden.

4. Verfahren nach einem der Ansprüche 1 bis 3, **dadurch gekennzeichnet, dass** den Knochen und/oder Gräten bzw. der Zusammensetzung Magnesiumverbindungen und/oder Kaliumverbindungen zugegeben werden.

5. Verfahren nach Anspruch 4, **dadurch gekennzeichnet, dass** 10 bis 40 %, vorzugsweise 25 % MgCO₃ zugegeben wird.

6. Verfahren nach einem der Ansprüche 1 bis 5, **dadurch gekennzeichnet, dass** den Knochen und/oder Gräten bzw. der Zusammensetzung davon Siliziumverbindungen zugegeben werden, beispielsweise in Form von Wasserglas, Kieselgur und/oder Perlite.

7. Verfahren nach einem der Ansprüche 1 bis 6, **dadurch gekennzeichnet, dass** der Schritt (a) und der Schritt (b) in demselben Reaktionsbehälter durchgeführt werden

8. Verfahren nach einem der Ansprüche 1 bis 7, **dadurch gekennzeichnet, dass** die in dem Schritt (a) und/oder dem Schritt (b) gewonnene Energie dem Verfahren rückgeführt wird.

9. Verfahren nach einem der Ansprüche 1 bis 8, **dadurch gekennzeichnet, dass** die in Schritt (a) entstehenden Gase abgesaugt und entschwefelt werden.

10. Verfahren nach Anspruch 9, **dadurch gekennzeichnet, dass** die Entschwefelung mit Hilfe von Schwefelbakterien erfolgt,

## Claims

1. A method of producing phosphates and/or phosphate-containing compounds, comprising the steps of:
(a) heating bones and/or fish bones or a combination of these components in the absence of oxygen at temperatures between 500°C to 1100°C,
(b) secondary combustion of the carbon formed in step (a) under oxidising conditions at temperatures between 500°C to 1200°C.

2. A method according to Claim 1, **characterised in that** step (a) is carried out at a temperature of between 700°C to 900°C.

3. A method according to either one of Claims 1 or 2, **characterised in that** the bones and/or fish bones or the combination thereof are circulated before step (a) and/or step (b).

4. A method according to any one of Claims 1 to 3, **characterised in that** magnesium compounds and/or potassium compounds are added to the bones and/or fish bones or the combination thereof.

5. A method of according to Claim 4, **characterised in that** 10 to 40%, preferably 25% MgCO₃, is added.

6. A method according to any one of Claims 1 to 5, **characterised in that** silicon compounds, for example in the form of water glass, kieselguhr, and/or perlite, are added to the bones and/or fish bones or the combination thereof.

7. A method according to any one of Claims 1 to 6, **characterised in that** step (a) and step (b) are carried out in the same reaction vessel.

8. A method according to any one of Claims 1 to 7, **characterised in that** energy recovered in step (a) and/or step (b) is recycled to the process.

9. A method according to any one of Claims 1 to 8, **characterised in that** the gases formed in step (a) are removed by suction and are desulphurised.

10. A method according to Claim 9, **characterised in that** the desulphurisation is carried out with the aid of sulphur bacteria.

## Revendications

1. Procédé de fabrication de phosphates et/ou de composés phosphatés, comprenant les étapes suivantes :
(a) chauffage d'os et/ou d'arêtes ou d'une combinaison de ces composants en l'absence d'oxygène à des températures comprises entre 500 et 1100 °C,
(b) post-incinération du carbone produit à l'étape (a) dans des conditions oxydantes à des températures comprises entre 500 et 1200 °C.

2. Procédé selon la revendication 1, **caractérisé en ce que** l'étape (a) est réalisée à une température comprise entre 700 et 900 °C.

3. Procédé selon une des revendications 1 ou 2, **caractérisé en ce que** les os et/ou arêtes ou leur combinaison sont brassés avant l'étape (a) et/ou l'étape (b).

4. Procédé selon une des revendications 1 à 3, **caractérisé en ce que** des composés de magnésium et/ou des composés de potassium sont ajoutés aux os et/ou arêtes ou leur combinaison.

5. Procédé selon la revendication 4, **caractérisé en ce que** 10 à 40 %, de préférence 25 % de MgCO₃ sont ajoutés.

6. Procédé selon une des revendications 1 à 5, **caractérisé en ce que** des composés de silicium, par exemple sous la forme de verre soluble, diatomite et/ou perlite, sont ajoutés aux os et/ou arêtes ou leur combinaison.

7. Procédé selon une des revendications 1 à 6, **caractérisé en ce que** l'étape (a) et l'étape (b) sont exécutées dans le même récipient de réaction.

8. Procédé selon une des revendications 1 à 7, **caractérisé en ce que** l'énergie produite à l'étape (a) et/ou à l'étape (b) est recyclée dans le procédé.

9. Procédé selon une des revendications 1 à 8, **caractérisé en ce que** les gaz produits à l'étape (a) sont aspirés et désulfurés.

10. Procédé selon la revendication 9, **caractérisé en ce que** la désulfuration est réalisée à l'aide de bactéries du soufre.
